(19) Europäisches Patentamt
European Patent Office
Office européen des brevets

(11) **EP 4 650 888 A1**

(12) **EUROPEAN PATENT APPLICATION**

(43) Date of publication:
**19.11.2025 Bulletin 2025/47**

(21) Application number: **24176723.5**

(22) Date of filing: **17.05.2024**

(51) International Patent Classification (IPC):
***G05B 15/02*** (2006.01)

(52) Cooperative Patent Classification (CPC):
**G05B 15/02;** G05B 2219/2642

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **vilisto GmbH
21079 Hamburg (DE)**

(72) Inventors:
• **STEHNKEN, Lasse
21075 Hamburg (DE)**
• **BERGER, Christoph
21073 Hamburg (DE)**

(74) Representative: **Schulz Junghans
Patentanwälte PartGmbB
Großbeerenstraße 71
10963 Berlin (DE)**

(54) **METHOD, SYSTEM AND COMPUTER PROGRAM FOR DETERMINING AN EFFICIENCY OF AN ENERGY-SAVING MEASURE IN BUILDINGS**

(57) The invention relates to a method for determining an energy saving of a heater system, wherein the heater system comprises one or more heaters, wherein each heater is operable to operate in a first mode of operation and a second mode of operation, wherein the first and second mode of operation differ in at least one control-parameter that is used to control the surrounding temperature, the method records heat data during the first and second modes of operation and determines an energy consumption, and compares the energy consumption for the modes of operation. This allows to quantify an energy saving measure, when switching from conventional heating to "smart" heating of a building.

Fig. 1

**Description**

The invention relates to a method for determining an energy saving of a heater system according to claim1.

The carbon footprint associated to heating of buildings in cold periods is one of the largest fractions of the $CO_2$ emission in many countries.

Therefore, there is a need to reduce said footprint as fast and efficiently as possible.

In the art, so-called smart heating solutions are known to control heat consumption based on an occupancy level of the rooms.

In this context, EP 3318948 A1 discloses a thermostat configured and arranged to operate a heater based on detecting a presence of a person in the room. By adaptively and automatically learning times of occupancy of the room the heater may be controlled such, that unnecessary heating is prevented.

While great efforts are already being made in the electricity sector to digitally record and visualize energy consumption, customers in the heating market do not have adequate and digital measurement technology for recording heat and/or gas consumption during the year as a result of heating a building. Annual billing or measurement data recording at campus level, as opposed to building level, is the standard.

Building owners and users are keen to optimize energy consumption costs, but always with proof of how much the measures implemented have saved. However, in order to validly substantiate the savings achieved, there is a need for digitalization of consumption recording and the calculation of a qualified baseline. There is no customer benefit and therefore no incentive to simply install new, networked meters, while energy-saving measures face a verification problem due to the lack of meters on the market. As a result, a great deal of manual effort is required to record and provide this data and to evaluate the savings. There is therefore an urgent need for a process that enables effective measures to reduce energy consumption and the necessary trust based on valid data and baselines.

Previously, baselines had to be recorded long before the energy-saving measure, because the energy-saving measure could not be switched off digitally using software. When replacing an old pump with a high-efficiency pump, for example, the pump would have to be replaced again and again for this procedure if no historical data was available at the time of replacement. Typically, it is necessary to record about one year of historical data before an energy-saving measure may be applied, which slows down significantly any carbon-reducing measure in this sector.

An object of the present invention is to provide a method, system and computer program that allows determination of valid data and baselines without the need to obtain historical data.

The object is achieved by the device having the features of claim 1.

Advantageous embodiments are described in the dependent claims.

According to a first aspect of the invention, a method for determining an energy saving of a heater system is disclosed. The heater system comprises one or more heaters, wherein each heater is operable to operate in a first mode of operation and a second mode of operation, wherein the first and second mode of operation differ in at least one control-parameter that is used to control a surrounding temperature, the method comprising the steps of:

a) operating the one or more heaters alternatingly and particularly synchronously in the first mode of operation during first periods and in the second mode of operation during second periods,

b) determining heat data comprising an information on an inlet heat of the heater system and an information on an outlet heat of the heater system for the first and second periods,

c) determining, particularly at a computer, such as a server, from the heat data for each first period a first quantity indicative of a heat consumption of the heater system during the first period, and for each second period a second quantity indicative of a heat consumption of the heater system during the second period,

d) providing the first and the second quantities to a model, particularly a computer-implemented model configured to execute step e),

e) determining with the model for one or more selected second periods a reference quantity for each selected second period, wherein the reference quantity is indicative of a reference heat consumption for the selected second period, wherein the reference heat consumption is indicative of a heat consumption that the system would have exhibited, if the one or more heaters would have operated in the first mode of operation during the selected second period,

f) determining a deviation of the second quantities and the reference quantities for said one or more selected second periods, particularly wherein the deviation is indicative of an energy saving of the heater system, when operated in the second mode of operation as compared to the first mode of operation.

The invention allows for determining a baseline of heat consumption that would have been incurred, in case the heater system would be operated in the first mode of operation only and throughout, wherein at the same time the method allows for a comparison of the heat consumption that is incurred when operating the heater system in the second mode of operation.

Based on the determined deviation of the second quantities to the reference quantities, the method allows to determine said baseline consumption without requiring any knowledge on historical heat consumption data of the heater system.

Without limitation, the first mode of operation may be a conventional mode of operation during which the surrounding temperature is set manually and not automatically adjusted based on the at least one control-parameter.

The second mode of operation, in contrast, may control the surrounding temperature based on the at least one additional control parameter.

It is noted that the first and the second mode of operation are exchangeable in terms of the use and nonuse of the at least one control parameter. That is, in particular, the second mode of operation may refer to the conventional mode of operation, wherein the first mode of operation may be configured to control the surrounding temperature based on the at least one control parameter. A potential energy saving may be positive (energy is conserved with respect to the other mode of operation) or negative (the respective other mode of operation conserves more energy).

The first and the second mode of operation differ by at least one control-parameter and may be understood in the context of the current specification that at least one different control-parameter is used for controlling the surrounding temperature, when comparing the control mechanics of the first and the second mode of operation. The control-parameter may take on different values, which in the context of the current specification does not render the control-parameter to be different from the first or second mode of operation. The first and the second mode of operation differing by at least one control parameter particularly refers to a control-parameter - and particularly not its value - that is used that leads the first mode and the second mode of operation to control the surrounding temperature.

In particular, the second mode of operation is configured to use the at least one control parameter for controlling the surrounding temperature, wherein the first mode of operation does not make use of the at least one control parameter to control the surrounding temperature.

Supposedly, the second mode of operation is more energy efficient than the first mode of operation, such that it is expected to reduce heat consumption, by driving the heater system in the second mode only.

The term "surrounding temperature" is particularly a temperature of a surrounding of one or more heaters of the heater system. In case the heaters are arranged in a room, the surrounding temperature may be understood as a room temperature of a room in which the heaters are located. That is, while a room might comprise more than one heater, the heater system and its heaters might be distributed in a plurality of rooms, wherein controlling the room temperature in this context is to be understood that each heater may be adjusted to control the room temperature of the room the respective heater is located in.

The second mode of operation may be regarded as the smart mode of operation, wherein the first mode of operation may be considered as the conventional mode of operation.

By alternating the modes of operation, the model may be generated and trained that it determines an amount of heat or an equivalent quantity, such as a heat power that would have been necessary to control the surrounding temperature, if the system would have been operated in the first mode operation during periods when the system indeed has been operated in the second mode of operation.

This alternating of modes of operations allows for accounting for similar weather conditions, and other conditions that might change over the course of a day or year.

Operating the one or more heaters alternatingly and particularly synchronously in the first mode of operation during first periods and in the second mode of operation during second periods.

In particular, the one or more heaters are operated alternatingly several times, such that the first and the second mode are adopted several times, in particular at least five, ten or more times each, during execution of the method.

Particularly, the first and second mode are operated alternatingly up to ten times only.

The method allows for an advanced comparison between the two modes of operation as, historical data may not be comparable to the degree the generated reference data are to the second data.

The heater system may be comprised of one or more buildings. The heater system may be configured to control the heat in an apartment, a room, or more entire buildings. The method is largely flexible and adaptive to any pre-existing heater system.

In order to allow for operation of the heaters in a first mode and a second mode, it may be advantageous to install one or more thermostats that are capable to assume both modes of operation and to operate the heaters according to the first or the second mode.

The heaters of the heater system need to be operated synchronously in order to avoid competing over the control of temperature. For example, in case two heaters are located in the same room, these two heaters need to be operated synchronously.

In this regard it is clear that the term "heater system" may not necessarily need to be tied to an entirety of a hardware heater system of a room, an apartment, building or an infrastructure, but may be defined so as to provide suitable units that are operated according to the method. These units may be referred to as balance rooms, that are evaluated separately.

For example, in case the comparison between the heat consumption between the first and the second mode is set to be determined only for a single room in an apartment, the heater system would comprise the one or more heater of said room and would particularly not comprise heaters in different rooms. Similarly, in case the comparison is set to be made of the entire apartment, building or floor all heaters of the apartment may be comprised by the heater system, but heaters in different apartments may not be comprised in the notion of the heater system according to the method.

The step of determining heat data comprising the information on the inlet heat of the heater system and the information on the outlet heat of the heater system for the first and second periods, comprises in particular obtaining, e.g. automatically or by way of data transfer from the heater system to a computer, the heat data.

The information on the inlet heat may comprise an information on an amount of heat, a heat power, or quantities from which a heat amount or an equivalent quantity may be derived such as a mass flow and a temperature of the inlet of the heater system.

For example, it is possible to record a mass flow m and a temperature of said flow at the inlet and at the outlet. The heat Q may then be determined by $Q = m*dT$, wherein $dT$ is a difference between the temperatures at the inlet and the outlet.

Thus, the information on the inlet heat and the outlet heat may comprise an information on the mass flow in the system, e.g. measuring said mass flow at the inlet or the outlet, and an information the temperature at the inlet and the outlet.

The inlet may be a portion of the heater system at which an amount of heat that is delivered to the heaters of the heater system may be determined or measured.

Similarly, the information on the outlet heat may comprise an information an amount of heat, a heat power, or quantities from which a heat amount or an equivalent quantity may be derived such as a mass flow and a temperature of the outlet of the heater system.

The outlet may be a portion of the heater system at which an amount of heat or a heat power that is returned from the heaters of the heater system may be determined or measured.

In general, the information on the inlet or outlet heat is meant to be configured to obtain an amount of heat or heat power or an equivalent quantity provided or returned from the heaters respectively.

The term "heat consumption" in the context of the current specification particularly refers to an amount of heat, i.e. an energy, a heat power, or an equivalent quantity indicative of the energy or power related to the heat.

The first quantity as well as the second quantity may comprise one or more values. For example, the first quantity may comprise an average value of energy consumption during the associated first period. Alternatively, or additionally, the first quantity may comprise a plurality, in particular a series of values of energy consumption during the associated first period. Said value or values may be an amount of heat or a heat power. Said value may be an electric power used for generating the heat.

Similarly, the second quantity may comprise an average value of energy consumption during the associated second period. Alternatively, or additionally, the second quantity may comprise a plurality, in particular a series of values of energy consumption during the associated second period. Said value or values may be an amount of heat or a heat power. Said value may be an electric power used for generating the heat.

With the same understanding, the reference quantity may comprise one or more values. For example, the reference quantity may comprise an average value of energy consumption during the associated first period. Alternatively, or additionally, the reference quantity may comprise a plurality, in particular a series of values of energy consumption during the associated first period. Said value or values may be an amount of heat or a heat power.

In particular, the first, the second as well as the reference quantities are of the same kind, and more particularly these quantities are of the same dimension.

The first, the second as well as the reference quantities may each be or comprise a scalar value, a vector, a matrix, or a tensor of higher dimension.

In particular, the term "indicative for" refers to the quantity that is thought to be indicative to exhibit or comprise an information that allows deriving the entity for which the quantity is indicative for.

For example, a quantity indicative for a heat consumption may be an information on the amount of heat or a heat power, e.g. in form of a number. The quantity does not need to be a number itself, but said quantity may be required to provide or comprise an accessible information to the effect that the entity for which the quantity is said to be indicative is clearly and unambiguously derivable from said quantity.

The term "period" in particular refers to a time interval. The first periods may have the same duration or be of different duration. Similarly, the second periods may have the same duration or be of different duration.

Further, the first and the second periods may have the same duration.

The duration may be adjustably controlled or pre-defined. The durations of the first and the second periods may be between 5 minutes to 12 months, particularly between 1 day and 1 week or between 1 day and a 1 month.

The model is preferably a computer-implemented model. The model may be based on a machine learning algorithm.

As input, the model receives the first and the second quantities, and particularly some or all of the control parameters for the second mode of operation. Further, the model may receive the times during which the system has been operated in the first and the second mode of operation.

Further information may be provided to the model, such as for example weather data.

Selection of the one or more second periods maybe done at random, serially or chronologically.

It is noted that the first periods and the second periods do not need to be of the same duration, i.e. they may differ in duration. In particular the first periods may vary in duration as well as the second periods may vary in duration.

It is noted that the first periods and the second periods do not need to have the same number of executions. Variation of duration may depend on a quality of the predictors of the model and/or a training or quality state of the model for certain outdoor conditions, such as specific weather conditions or outside temperatures. For conditions in which the predictors are supported by comparably few data, alternating from the first to the second period or vice versa may be advantageous, wherein for predictors supported by a large amount of data, there is no need to alternate from the first to the second mode or vice versa. Ideally, for well-supported predictors, the system is driven in the energy efficient mode of operation, e.g. the second mode of operation. For predictors with only little support by the heat data, it may be advantageous to alternate several times between the first mode of operation and the second mode of operation to specifically train the model for these conditions.

It is possible to determine the reference quantity for all second periods. Particularly, the model is configured to predict the reference quantity for any second period in the future.

In step e) of the method, the invention in essence generates hypothetical heat consumption data for periods in which the heater system has been operating in the second mode of operation, as if the heater system would have been operating in the first mode of operation.

This allows to determine an energy saving of the heater system, when operated in the second (or in the first) mode of operation. The comparison between the hypothetical (reference) heat consumption and the heat consumption in the second mode allows to determine, whether an anticipated energy saving would indeed manifest itself in the specific setting in which the energy saving measures are to be incorporated. The setting might be a specific building or apartment, with a specific heater system hardware in place and featuring specific insulation properties of the building, as well as a macro- and micro-climate where the building is located.

There is no need to obtain historical records of heat consumption data as the heat consumption is evaluated for both modes of operation in essence simultaneously.

The deviation may be a difference or a relation of the second and reference quantities, i.e. second and reference energy consumption during the first period(s).

Another advantage of the method is that while the method is executed, i.e. while the energy saving measure is being implemented already a carbon footprint of the system is reduced.

According to another embodiment of the invention, for operating the one or more heaters in the first and the second mode, the one or more heaters of the heater system comprise an associated thermostat that control the one or more heaters to adjust the surrounding temperature.

As elaborated one thermostat may control one or more heaters simultaneously. Alternatively, each heater may comprise an associated thermostat.

This allows for executing the method in particular with thermostats that are configured to adjust the heaters to be operable in the first and the second mode.

The thermostats may have sensors that allow to determine an occupancy (of persons) in the surrounding of the thermostat.

It may be possible to exchange pre-installed thermostats of the heater system with thermostats that are configured to switch the modes of operation at the one or more heaters, in case the pre-installed thermostats would not allow switching to the second mode of operation.

According to another embodiment of the invention, the first mode of operation is configured to keep the surrounding temperature at a preset value, in particular during the whole first period.

This embodiment details the first mode of operation to the effect that the first mode of operation is a "conventional" mode of heating, e.g. setting the temperature to a preset value that remains unaltered independent of for example, a time of day, an occupancy of the surrounding or room. Typically, the first mode of operation is more or less only manually adjustable - by manually adjusting a setting of the thermostat to another preset value.

According to another embodiment of the invention, the second mode of operation is configured to adjust the surrounding temperature based on one or more control-parameters.

This embodiment specifies the second mode of operation. The second mode of operation may be considered a "smart" mode of operation that takes into account one or more control parameters, such as an occupancy of the surrounding or the room, a time of day, a time of the year, a season.

Advantageous control parameters are disclosed in the following embodiment. According to another embodiment of the invention, the one or more control-parameters are selected from one or more from the group consisting of:

- a presence or an expected presence of a person in the surrounding of the heater, in particular the surrounding of the thermostat,
- a day of the year,
- a day of the week,
- a time of day,
- a season of the year,
- an outside temperature, particularly an outside temperature of a preceding day,
- a solar irradiation the heater system is exposed to,
- a calendar, such as a holiday calendar
- a maximum and a minimum surrounding temperature.

These control parameters may influence an amount of heat necessary to keep or adjust a temperature in a surrounding of the one or more heaters.

Controlling the surrounding temperature based on one or more of these control parameters, allows for a "smart" heating and yields a potential reduction in energy consumption.

For example, in case one control parameter is the presence or the expected presence of a person, it is possible to reduce the surrounding temperature for times during which there is no presence or no expected presence of person in the room, wherein for times during which a presence is expected or in times in which a person is present, the temperature is adjusted accordingly. It is possible to adjust the temperature shortly before the expected presence of a person. Energy saving is achieved, each time there is no person in the room and the temperature may be reduced in response to the absence of a person. The question of how fast or volatile such a control based on the presence or expected presence may be designed dependent on the heat inertia, insulation and other factors of the system and is not a concern of the present invention.

According to another embodiment of the invention, the information on the inlet heat and the information on the outlet heat of the heater system is determined with a heat meter system, wherein the heat data is generated by the heat meter system, particularly wherein the heat meter system comprises or is a digital remote-controlled heat meter.

This embodiment particularly allows for an automated operation of the method. The term "remote-controlled" particularly refers to the heat meter system being configured for remote reading of the inlet and the outlet heat. For example, the heat meter system may be configured to transmit the heat data to a computer or a server executing the model.

Further, the heat meter system might be configured to transfer the heat data to a mobile device, e.g. via short-range transmission, wherein the mobile device in turn may be configured to transmit the heat data to the computer or the server.

The computer might be comprised in the mobile device as well.

According to another embodiment of the invention, the heat meter is a digital heat meter configured to generate the heat data, particularly wherein the digital heat meter comprises an interface to provide the heat data to a device such as a computer or the mobile device.

According to another embodiment of the invention, the heat data are transmitted by a data transmitter to a server, wherein the model is executed on the server. Particularly, the data transmitter is comprised by the heat meter.

Alternatively, the data transmitter may be comprised by a mobile device or a computer. This embodiment allows a flexible implementation of the method in an existing heater system, particularly wherein the heat data transfer is executed automatic by the corresponding device.

According to another embodiment of the invention, the model is a machine learning model, particularly selected from the group consisting of:

- a regression model,
- a neural network,
- a support vector machine.

According to another embodiment of the invention, the model is a regression model. A regression model provides in an advantageous fashion the flexibility to adapt to a broad variety of data types and variables.

The method allows for simultaneous training of the model and energy saving of the system. That is, the model may be initially trained or comes pre-trained with the first and the second quantities, wherein upon a certain level of quality, e.g. such as a standard deviation, or a variance of a Markov- Chain Monte Carlo algorithm (MCMC), the deviation of the second quantities and the reference quantities for said one or more selected second periods the estimated energy saving may be put out.

According to another embodiment of the invention, the first and the second mode of operation are alternated with a period in the range of one day to 365 days, particularly wherein the period is adjustable during execution of the method.

It may be advantageous to alternate the first and the second period several times per month, particularly wherein the first mode of operation is alternated after one week to the second mode, particularly wherein the second mode of operation is alternated back to the first mode of operation after a week. Thus, the first period has a duration of a week, wherein the second period has a duration of week as well.

This embodiment allows for energy saving already during the process called "baselining".

According to another embodiment of the invention, the model outputs the reference heat quantity and comprises one or more predictors selected from the group consisting of:

- a difference between a target room temperature and an outdoor temperature

- outdoor temperature and outdoor temperatures a few timesteps before current time step, e.g. six hours ago, twelve hours ago, 24 hours ago,

- average building temperature and average building temperature a few timesteps before current time step, e.g. six hours ago, twelve hours ago, 24 hours ago,

- workday, e.g. binary

- day of the week,

- sun hours and sun hours a few timesteps before current time step, e.g. six hours ago, twelve hours ago, 24 hours ago,

- precipitation and precipitation a few timesteps before current time step, e.g. six hours ago, twelve hours ago, 24 hours ago,

- humidity and humidity a few timesteps before current time step, e.g. six hours ago, twelve hours ago, 24 hours ago,

- cloudiness and cloudiness a few timesteps before current time step, e.g. six hours ago, twelve hours ago, 24 hours ago,

- pressure and pressure a few timesteps before current time step, e.g. six hours ago, twelve hours ago, 24 hours ago,

- time of day

- a presence of a person in the room.

According to another embodiment of the invention, the regression model is adjusted in intervals in particular each time heat data are received at the server.

This allows to update the regression model, while the method is executed.

According to another embodiment of the invention, the model is adjusted in regular intervals. For example, after a preset period of time, e.g. not less than 180 days, the model is analysed, e.g. by applying a Markov-Chain-Monte-Carlo method and setting the model to compute the lowest possible outcome. This model may be henceforth used to calculate the reference values.

According to another embodiment of the invention, the server controls the one or more thermostat remotely, comprising individually switching the one or more thermostats from the first mode of operation to the second mode of operation and vice versa. This embodiment allows for an automated and remote-controlled execution of the method.

According to another embodiment of the invention, the one or more thermostats transmit the mode of operation to the server. This allows for automated and remote-controlled execution of the method according to the invention.

According to another embodiment of the invention, the heat data comprise a timing information, wherein the transmitted heat data is assigned to the first or the second mode of operation of the one or more thermostats by the server based on the timing information.

The timing information may be indicative of the first or second period. Alternatively, based on the timing information the first and the second periods are identified.

This allows execution of the method on heater systems that may not comprise thermostats configured to record timing information. Thus, this embodiment renders the method more versatile with regard to applicability to a variety of different heater systems.

According to a second aspect of the invention, a system for determining an energy saving of a heater system in a building with the method according to the first aspect of the invention comprises at least the following components:

- a heater system comprising one or more heaters, wherein each heater is operable to operate in a first mode of operation and a second mode of operation, wherein the first and second mode of operation differ in at least one control-parameter that is used to control a surrounding temperature
- particularly wherein each heater of the heater system comprises an associated thermostat arranged and configured to control the heater for adjusting a surrounding temperature,
- wherein the system is configured to alternatingly and synchronously operate one or more heaters, particularly the associated thermostats in the first and the second mode of operation,
- a heat meter system configured and arranged to determine heat data comprising information on an inlet heat of the heater system and an information on an outlet heat of the heater system for the first and second periods,
- a data transmitter configured to transmit the heat data to a computer, such as a server, wherein the computer configured and arranged to execute steps d) to f) of the method.

The system allows for baselining existing heater systems.

Definitions, features, embodiment, examples and terms that have been introduced in the context of the first aspect of the invention may relate to the second aspect in the same or at least an analogous fashion. In particular, it is explicitly noted that features disclosed in the context of the first aspect may be used in the analogous fashion for specifying, limiting or amending the invention according to the second aspect and vice versa.

According to a third aspect of the invention, a computer program, particularly stored on a non-transitory storage medium, comprising computer program code that when executed on a computer, such as a general-purpose computer, in particular on the computer of the system, executes the method according to the first aspect, in particular the method steps d) to f).

The first and the second quantities may be obtained by the computer program via a computer interface, that allow the computer to interface with the components of the system according to the second aspect. Particularly, the first and the second quantities are determined on a heater system, wherein the heater system comprises one or more heaters, wherein each heater is operable to operate in a first mode of operation and a second mode of operation, wherein the first and second mode of operation differ in at least one control-parameter that is used to control the surrounding temperature, wherein the system according to the second aspect is configured to execute at least the following steps:

- operating the one or more heaters alternatingly and synchronously in the first mode of operation during first periods and in the second mode of operation during second periods,
- determining heat data comprising an information on an inlet heat of the heater system and an information on an outlet heat of the heater system for the first and second periods,
- determining from the heat data for each first period a first quantity indicative of a heat consumption of the heater system during the first period, and for each second period a second quantity indicative of a heat consumption of the heater system during the second period.

The computer may be located on a server, to which the components of the system are connected by way of data connection. The data connection may be established by wireless or wired data devices, such as data cables, or wireless routers. The latter may be configured to transmit the data via radio waves.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

Fig. 1 shows a schematic system according to the invention that is operable with the method according to the invention.

Fig. 2 shows alternating first and second modes of operation over time

In the following various advantages and features of the method, system, and computer program are elaborated by way of example.

Optimization of heating energy consumption: In view of multiple transgressions of planetary boundaries, the efficient use of finite resources, such as primary energy sources in the form of fossil fuels, is one of the greatest challenges of our time. The method according to the invention contributes to the optimization of heating energy consumption by recording energy consumption and determining energy savings, and at the same time is already a savings measure through the use of thermostats controlling the heater is a unique fashion. The method therefore makes it possible to reduce the consumption of heating energy and thus also prevent $CO_2$ emissions.

Time acceleration of effectiveness measurements: Previously, baselines of historic heat consumption of heater systems had to be recorded well in advance of the savings measure, because the savings measure could not be switched off digitally via software. When replacing an old pump with a high-efficiency pump, for example, the pump would have to be replaced again and again for this procedure if no historical data was available at the time of replacement.

The operating mode of the thermostats controlling the heaters can be adjusted alternatingly e.g. via a computer program so that it is possible to switch back and forth between baseline recording, first mode of operation (conventional operating mode) and implementation of the savings measure, second mode of operation (demand-dependent, intelligent operating mode). This means that the measure (installation of such thermostats) can be used from day one of the project and saves the customer energy, $CO_2$ emissions and costs right from the start.

This procedure is also advantageous because it allows baselining to be repeated at any time without system changes. This means that the savings effects of further efficiency measures can be precisely determined. This also means that the initial mode of operation (the first mode of operation), i.e. conventional heating, can be restored without any structural changes.

The process establishes a completely new link between savings measures and proof of effectiveness. Digital thermostats may be used to optimize heat consumption and at the same time enable the recording of a baseline for the proof of effectiveness, i.e. the energy savings achieved.

The method combines digital thermostats, heat metering and the evaluation of the data collected in this way without the need for the expensive installation of a comprehensive building management system, does not exist on the market.

The method according to the invention may be executed in a digitized fashion via an IT cloud infrastructure. Data from the thermostats and the heat meter system, which may also be digitally connected, can be transferred to a server, where they are evaluated fully automatically using the regression model.

The method allows switching between the first and the second mode of operation digitally and fully automatically. This means that the historic mode of operation, e.g. the first mode of operation can be restored at any time without any structural changes to the heating system.

According to the current state of the art in accordance with official guidelines, weather conditions are determined using the so-called degree-day method and are therefore primarily based on the outside temperature. In contrast to this method, the method according to the invention is based beyond the outside temperature on more specific measurement data on the actual presence of a person, i.e. the actual use of heating energy by people, a distinction between working days and non-working days, the previous day's temperature or solar radiation.

The method according to the invention makes a significant contribution to ensuring that efficiency measures can be scaled up much more quickly than before and that climate protection targets cannot be tackled only one year after the start of the baseline recording, but essentially immediately, once the method is executed.

A separate adjustment for weather influences is no longer necessary, as the heating energy is aggregated using a bottom-up method and weather influences are taken into account as an argument in the function, for example in the form of the regressor variable $\vartheta_U$ (outdoor temperature).

In addition, the method according to the invention differs from existing methods in that it is independent of historical data. By changing the modes of operation, the consideration of historical consumption data is no longer necessary for the determination of energy savings.

According to the method of the invention, the heat data may be continuously compared with an energy consumption predicted by the model during baselining until an appropriate quality of information has been achieved. The baseline is then recorded and a saving is also calculated for the ongoing time. The thermostats used for this purpose make it possible to switch between different modes of operation in particular and also represent a savings measure. In some cases, the thermostats can be automatically switched to the second mode of operation mode permanently and are therefore also a measure for realizing savings.

If a new baseline needs to be recorded at a later date (e.g. due to changes in the general conditions such as the use of the building), the method can be repeated remotely.

The method enables users to optimize heating systems through energy efficiency measures not only on the heating energy consumer side (individual room control using intelligent thermostats on the radiator), but also on the producer or distribution side, thus significantly increasing the potential for realizable energy savings without reducing end user comfort.

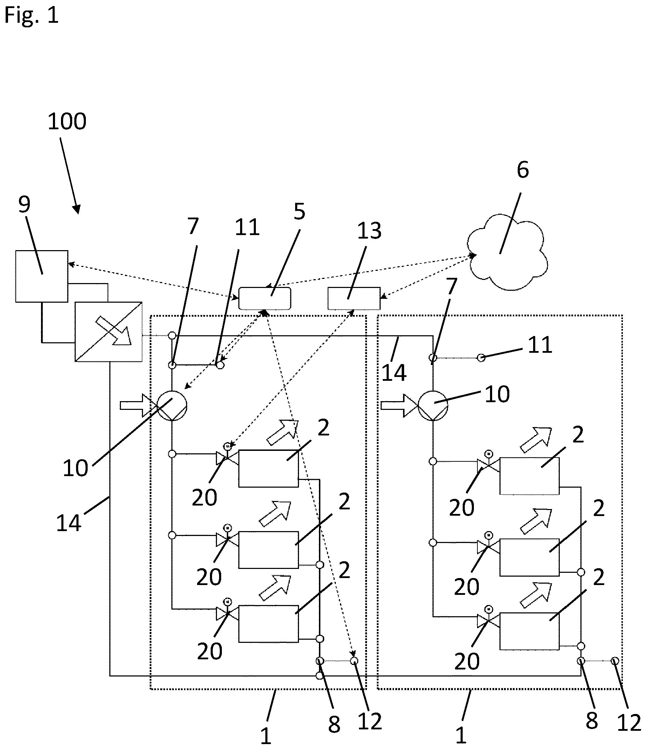

In Fig. 1, a schematic drawing of an exemplary system 100 is depicted that is configured to execute the method according to the invention.

In the example the system in essence comprises two heater systems 1, and wherein the heater systems 1 are comprised in a building having two floors, wherein each floor has its own associated heater system 1, wherein each heater system 1 comprises a heat inlet 7 and associated heaters 2 that receive a heating fluid via the respective inlet 7.

From a heat source 9, heat is delivered to the heater systems 1. The system 100 comprises two heat inlets 7 connected to the heat source 9. At the heat inlets 7 a mass flow as well as an inlet temperature is recorded with a circulation pump 10 and an associated thermometer 11. This allows to determine an information on an inlet heat of the system 1.

The information on the inlet heat is transmitted to a first server computer 5.

From the heat inlet 7 the heater fluid is guided to the respective heaters 2 (three heaters per heat inlet 7). Each heater 2 comprises a thermostat 20 that is configured to control the heater 2 individually. The thermostats 20 are configured to switch between the first mode of operation and the second mode of operation. Without loss of generality, it is assumed that the first mode of operation corresponds to a conventional mode of operation, i.e. a room temperature is kept at a preset value by the thermostat 20 during this mode of operation. The second mode of operation in turn is associated to a mode of operation that controls the temperature of the heaters 2 by means of at least one additional control-parameter, such as for example a presence of a person on the room, a time of day, a day in the week (workday or weekend), etc. The second mode of operation may be referred to as a "smart" mode of operation.

The thermostats 20 may be remotely controllable by a second server 6 that executes a computer-implemented model trained and configured to predict a heat consumption associated to the first mode of operation, for times when the system 100 is operated in the second mode of operation.

That is, the system 100 is operated alternatingly by way of the thermostats 20 in the first and the second mode of operation in order to gather heat data in both modes of operation. These data initially serve for training purposes of the model, wherein once the model has been trained, the system 100 may be operated continuously in the second mode of operation, while the model estimates the heat consumption that would have been incurred, if the system 100 would have been operated in the first mode of operation instead.

This allows determining energy savings during and after training of the model.

In order to generate heat data for both modes of operation, the heater fluid is guided to a heat outlet 8 of the system 100, wherein at least an outlet temperature is determined by a thermometer 12. This system 100 comprises two points at which the temperature is determined after the heater fluid has been flowing through the heaters 2.

From the difference in temperature at the heat inlet and the heat outlet and assuming there is no relevant heater fluid leakage in the system 100, an information on the outlet heat may be obtained. Heat data comprising the information on the inlet heat and the outlet heat are transmitted to the first server. It is noted that each heater 2 of the system 100 may be controlled individually and independently from the other heaters 2 of the system 100 depending on the control-parameter. For example, in case one of the control parameters comprises a presence of a person in the room (or in the surrounding of the heater 2), each heater 2 may be controlled differently as a result of the control-parameter.

The one or more control parameters allow for a differentiated control of heating, which in turn allows for energy saving.

From the first server 5, the heat data are transmitted to the second server 6 that executes the model during training and after training. Further, the second server may control the thermostats 20 of the heaters 2 via a control module 13, to switch between the first and the second mode of operation.

The model may be a regression model, comprising a plurality of predictors that are trained with and by way of the heat data.

The system 100 instead of being based on a heater fluid provided to the heaters may be based on electrical heating, wherein an electric energy consumption may be determined for the heater system 1 in both modes of operation. Electric energy consumption used by the heaters 2 is in essence an information on heat consumption. The heater fluid may be regarded as electric current. Inlet and outlet are measuring points of the electricity.

Further, the system 100 in particular the heat source 9 may be configured to heat with a heater fluid, such as water, wherein heating the heater fluid is achieved by electrical heating.

The process of determining a heat consumption during the first mode of operation, is also referred to as baselining.

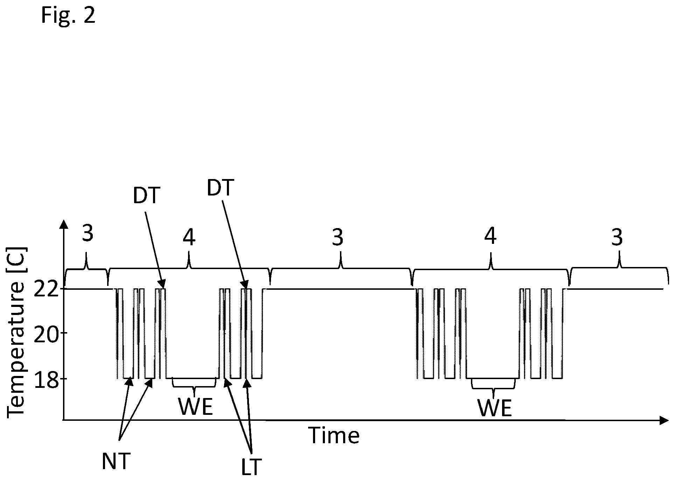

To ensure that energy savings are already achieved during the training period, heat data collection, during which the thermostats 20 operate in the first mode of operation, i.e. imitate the behavior of conventional thermostats 20, is carried out for example at one-week intervals (cf Fig. 2) alternating with the second mode of operation, during which the thermostats 20 are regulated according to the one or more control parameter. This special mode of operation for recording the baseline data is shown in Fig. 2.

In Fig. 2 a room temperature is plotted as a function of time, showing the alternating of the first and second mode of operations with a frequency of 1 week, wherein each first and second period has a duration of one week.

As discussed in previous sections other modes of alternation may be selected for example depending on a training state of the model and/or data quality or quantity acquired for specific conditions.

Switching between the first and second mode of operation is executed Wednesdays during daytime.

During second periods and weekend WE, the room temperature is kept at a lower level. Further, depending on the occupancy of the room, the temperature is adjusted, too in this example. During day time DT, while people are present in the room, the temperature is kept at the desired room temperature, wherein once the room is empty in the night time NT, the temperatures is reduced until the early morning. As can be seen, during daytime DT, there is a short intermission LT of heating, which corresponds to lunch break around noon, therefore, daytime heating during weekdays appears as double peak.

Thus, this example discloses as control parameters the occupancy level as well as the time of day and the day of week.

In contrast, during first periods, the room temperature is kept at the same level throughout, causing the system to consume more energy.

With this method, it is no longer necessary to carry out a time-consuming, separate baselining before the energy-saving measure can be implemented, as approx. half of the possible savings can be generated while the baseline data is being recorded, while increasingly better higher data quality is achieved when extending the measurement period, i.e. the longer the modes of operations are alternated over.

Furthermore, it is advantageous with regard to the model quality,

- that baselining and energy saving (i.e. first and second mode of operation) take place directly one after the other in the time sequence, as this achieves the greatest possible similarity between the two modes of operation.

- that the transition between conventional heating (i.e. first mode of operation) and the second mode of operation takes place in such a way that a "warm" building/floor/ room is transferred in each case. This prevents, for example, energy consumption being distorted by the fact that the room temperature is lowered at the weekend during the second mode of operation and on Monday morning, after the changeover, the cooling of the building during the weekend has to be compensated for by conventional heating in the first mode of operation.

- that the method can be switched on and off digitally and fully automatically, e.g. by the server 6. This means that the initial mode of operation (first mode of operation) can be restored at any time without any structural changes.

Description of the calculation of energy savings based on the regression model

The transport medium (heater fluid) of the building's heating system 100 is defined as the system boundary. The system 100 may be divided into individual heating lines, or heater systems 1, which use circulation pumps 10 to bring the transport medium with the flow temperature $\vartheta_{VL}$ and thus also a substance-bound quantity of heat Q from the heat source 9, for example a boiler in the boiler room, via pipes 14 to the heat sinks, to the heaters 2 (also referred to as radiators) in the rooms. At the heat sinks, the transport medium cools down to the return temperature $\vartheta_{RL}$ through heat transfer to the room air and is then transported back via pipes 14 to the heat source 9.

The energy to be saved is the thermal energy bound to the heater fluid, e.g. water in this example. The benefit of the system 100 is the heat transferred to the rooms to be heated, the cost of the system 100 is the heat supplied to the transport medium (also referred to as heater fluid in the context of the current specification). The difference between the benefit and cost is indicative to the energy loss or an energy consumption, for example through heat transfer from the pipes 14 to the environment during transportation. Significant and therefore considered influencing variables that determine the heating energy consumption are

- differences between standard room temperature and outside temperature averaged over the largest measuring interval $\Delta\vartheta(t) = (\vartheta_R - \vartheta_U(t))$, if the heating limit is not exceeded, wherein $\vartheta_U(t)$ is the outside temperature, $\vartheta_R$ is the standard room temperature (typically 20C),

- a difference between the standard room temperature and the outside temperature $\Delta\vartheta(t - T_{inert})$ before the time period $T_{inert}$ in order to take into account time-delayed effects such as the spread of heat fronts in the building walls, and

- the building occupancy.

The building occupancy may be determined by way of an occupancy probability, which is derived from presence models of the thermostats.

For each heater the energy consumption $Q_j$ may be calculated according to

$$Q_j = \int_0^{t_{mess}} \dot{m}_j * c_p * \left( \vartheta_{VL,j} - \vartheta_{RL,j} \right) \, dt$$

Wherein $\dot{m}_j$ is a change of the mass flow, $c_p$ a heat capacity of the heater fluid, e.g. water, $\vartheta_{VL,j}$ is the inlet

temperature and $\vartheta_{RFL,j}$ is the outlet temperature of the system. $t_{mess}$ is the measurement duration.

The heat consumption may be determined for the first and the second mode of operation separately and the model is trained with these data. Once the model is trained, it is capable to predict heat consumption for the first or the second mode, depending on the design of the model.

The model may be a multiple linear regression model. The regressand may comprise the thermal energy capacity of the heater fluid. Regressors may be selected from one or more of comprised by the group consisting of

- the differences between standard room temperature and outside temperature averaged over the largest measurement interval $\Delta\vartheta(t) = (\vartheta_R - \vartheta_U(t))$,

- the difference between standard room temperature and outdoor temperature $\Delta\vartheta(t - T_{inert})$ before the time period $T_{inert}$, in order to take into account time-delayed effects such as the spread of thermal fronts in the building walls, which is due to the thermal inertia of the buildings themselves, and

- suitable variables $x_3 \dots x_m$ are used to quantify the influence of the workforce or other influences.

Finally, a linear, multidimensional function of the form

$$Q_{BL} = b_0 + b_1 * \Delta\vartheta(t) + b_2 * \Delta\vartheta(t - T_{inert}) + b_3 * x_3 + \dots + b_m * x_m$$

may be used as the model. The model may be computer-implemented and computer-executed, in form of a computer program. The skilled persons is aware that similar regression models, in particular non-linear regression models may be construed in a similar fashion in analogy to this specific example of a regression model. The coefficients $b_0$ to $b_m$ are calculated automatically after carrying out a sufficient number of automated measurements of both the regressand and the regressors. Outdoor temperatures may be provided by an online service, the temperatures at the radiators, which may be included in the regression model as a further regressor, are measured by the thermostats 20 and the occupancy may be determined by means of an automated comparison with a calendar.

The values of the target variables, in this case the thermal power consumption of the transport medium in the reference state or after implementation of the method, are measured using heat meters that may be integrated into intelligent pumps or installed separately. $T_{inert}$ is estimated based on the time offset of the increases between room temperature and outdoor temperature when the outdoor temperature changes over time.

A separate adjustment for weather influences is not necessary, as the heating energy is aggregated using a bottom-up method and as the outdoor temperature $\vartheta_U$ is taken into account as an argument in the function.

Reference numerals

| | |
|---|---|
| 1 | heater system |
| 2 | heater |
| 20 | thermostat |
| 3 | first period |
| 4 | second period |
| 5 | heat meter system |
| 6 | cloud server |
| 7 | heat inlet |
| 8 | heat outlet |
| 9 | heat source |
| 10 | circulation pump |
| 11 | thermometer |
| 12 | thermometer |
| 13 | control module |
| 14 | pipes for the heater fluid |
| WE | weekend |
| DT | daytime |
| NT | nighttime |
| LT | daytime intermission |

**Claims**

1. A method for determining an energy saving of a heater system, wherein the heater system (1) comprises one or more heaters (2), wherein each heater (2) is operable to operate in a first mode of operation and a second mode of operation, wherein the first and second mode of operation differ in at least one control-parameter that is used to control the surrounding temperature, the method comprising the steps of:

   a) operating the one or more heaters (2) alternatingly in the first mode of operation during first periods (3) and in the second mode of operation during second periods (4),
   b) determining heat data comprising an information on an inlet heat of the heater system (1) and an information on an outlet heat of the heater system (1) for the first and second periods (3,4),
   c) determining from the heat data for each first period (3) a first quantity indicative of a heat consumption of the heater system during the first period (3), and for each second period (4) a second quantity indicative of a heat consumption of the heater system during the second period (4),
   d) providing the first and the second quantities to a model,
   e) determining with the model for one or more selected second periods (4) a reference quantity for each selected second period (4), wherein the reference quantity is indicative of a reference heat consumption for the selected second period (4), wherein the reference heat consumption is indicative of a heat consumption that the system would have exhibited, if the one or more heaters (2) would have operated in the first mode of operation during the selected second period (4) ,
   f) determining a deviation of the second quantities and the reference quantities for said one or more selected second periods (4).

2. The method according to claim 1, wherein for operating the one or more heaters (2) in the first and the second mode, the one or more heaters (2) comprise an associated thermostat (20) that control the one or more heaters (2) to adjust the surrounding temperature.

3. The method according to claim 1 or 2, wherein the first mode of operation is configured to keep the surrounding temperature at a preset value.

4. The method according to one of the preceding claims, wherein the second mode of operation is configured to adjust the surrounding temperature based on the one or more control-parameters.

5. The method according to one of the preceding claims, wherein the one or more control-parameters are selected from one or more from the group consisting of:

   - a presence or an expected presence of a person in the surrounding of the heater, in particular the surrounding of the thermostat,
   - a day of the year,
   - a day of the week,
   - a time of day,
   - a season of the year,
   - an outside temperature, particularly an outside temperature of a preceding day,
   - a solar irradiation the heater system is exposed to,
   - a calendar, such as a holiday calendar
   - a maximum and a minimum surrounding temperature.

6. The method according to one of the preceding claims, wherein the information on the inlet heat and the information on the outlet heat of the heater system (1) is determined with a heat meter system (5), wherein the heat data is generated by the heat meter system (5).

7. The method according to one of the preceding claims, wherein the model is a regression model.

8. The method according to one of the preceding claims, wherein the model outputs the reference heat quantity and comprises one or more predictors selected from the group consisting of:

   - a difference between a target room temperature and an outdoor temperature
   - outdoor temperature and outdoor temperatures a few timesteps before current time step,

- average building temperature and average building temperature a few timesteps before current time step,
- workday,
- day of the week,
- sun hours and sun hours a few timesteps before current time step,
- precipitation and precipitation a few timesteps before current time step,
- humidity and humidity a few timesteps before current time step,
- cloudiness and cloudiness a few timesteps before current time step,
- pressure and pressure a few timesteps before current time step,
- time of day,
- a presence of a person in the room.

9. The method according to one of the preceding claims, wherein the model is adjusted in intervals in particular each time heat data are received at a server (6) of the system (1).

10. The method according to one of the preceding claims, wherein the first and the second mode of operation are alternated with varying durations of the first and the second periods.

11. The method according to one of the claims 8 to 10, wherein alternating from the first to the second mode of operation or vice versa is executed based on an amount of heat data generated for one of the predictors comprised by the model.

12. The method according to one of the claims 2 to 11, wherein the server (6) controls the one or more thermostat (20) remotely, comprising individually switching the one or more thermostats (20) from the first mode of operation to the second mode of operation and vice versa.

13. The method according to one of the preceding claims, wherein the heat data comprise a timing information, wherein the transmitted heat data is assigned to the first or the second mode of operation of the one or more thermostats (20) by the server (6) based on the timing information.

14. A system (100) for determining an energy saving of a heater system (1) in a building with the method according to one of the preceding claims comprising:

   - a heater system (1) comprising one or more heaters (2), wherein each heater (2) is operable to operate in a first mode of operation for first periods (3) and a second mode of operation for second periods (4), wherein the first and second mode of operation differ in at least one control-parameter that is used to control a surrounding temperature, wherein the system (100) is configured to alternatingly and synchronously operate one or more heaters (2), particularly the associated thermostats (5) in the first and the second mode of operation,
   - a heat meter system (5) configured and arranged to determine heat data comprising information on an inlet heat of the heater system (100) and an information on an outlet heat of the heater system (100) for the first and second periods (3,4),
   - a data transmitter configured to transmit the heat data to a computer (6), such as a server, wherein the computer configured and arranged to execute steps d) to f) of the method.

15. A computer program, particularly stored on a non-transitory storage medium, comprising computer program code that when executed on a computer, in particular on the computer of the system (100), executes the method of one of the preceding claims, in particular, the method steps d) to f).

Fig. 1

Fig. 2

Europäisches
Patentamt
European
Patent Office
Office européen
des brevets

# EUROPEAN SEARCH REPORT

**Application Number**

EP 24 17 6723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/160913 A1 (PARKER KEVIN L [US] ET AL) 30 June 2011 (2011-06-30) * the whole document * ----- | 1-15 | INV. G05B15/02 |
| X | US 2007/143045 A1 (MACGREGOR PAUL [US]) 21 June 2007 (2007-06-21) * the whole document * ----- | 1,14,15 | |
| X | US 2024/003575 A1 (KUMAR ADITYA [CH] ET AL) 4 January 2024 (2024-01-04) * the whole document * ----- | 1,14,15 | |
| X | US 11 802 706 B1 (ZHAO YE [CN] ET AL) 31 October 2023 (2023-10-31) * the whole document * ----- | 1,14,15 | |

**TECHNICAL FIELDS SEARCHED (IPC)**

G05B
G05D
G06Q
F24F

The present search report has been drawn up for all claims

| Place of search | Date of completion of the search | Examiner |
|---|---|---|
| The Hague | 3 November 2024 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6723

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2024

| Patent document cited in search report | | Publication date | Patent family member(s) | | Publication date |
|---|---|---|---|---|---|
| US 2011160913 | A1 | 30-06-2011 | EP | 2354681 A1 | 10-08-2011 |
| | | | EP | 2722601 A2 | 23-04-2014 |
| | | | US | 2011160913 A1 | 30-06-2011 |
| US 2007143045 | A1 | 21-06-2007 | NONE | | |
| US 2024003575 | A1 | 04-01-2024 | EP | 4300000 A1 | 03-01-2024 |
| | | | US | 2024003575 A1 | 04-01-2024 |
| US 11802706 | B1 | 31-10-2023 | CN | 116336543 A | 27-06-2023 |
| | | | US | 11802706 B1 | 31-10-2023 |

EPO FORM P0459

For more details about this annex : see Official Journal of the European Patent Office, No. 12/82

**EP 4 650 888 A1**

**REFERENCES CITED IN THE DESCRIPTION**

**Patent documents cited in the description**

- EP 3318948 A1